# EUROPÄISCHE PATENTSCHRIFT

(11) **EP 0 459 014 B1**
(45) Veröffentlichungstag und Bekanntmachung des Hinweises auf die Patenterteilung: **18.05.1994**
(21) Anmeldenummer: 90121656.4
(22) Anmeldetag: 13.11.1990
(51) Int. Cl.: B65G 69/18

(54) **Einrichtung zum staubarmen bzw. staubfreien Beladen umschlossener Räume**
Device for dustpoor or dustless loading of enclosed spaces
Dispositif pour chargement pauvre de ou sans poussière des espaces enfermés

(30) Priorität: 15.05.1990 DE 4015515; 10.08.1990 DE 4025341
(43) Veröffentlichungstag der Anmeldung: 04.12.1991
(73) Patentinhaber: PWH Anlagen + Systeme GmbH, D-66386 St. Ingbert-Rohrbach (DE)
(72) Erfinder: Igel, Hanns-Jörg, W-6653 Blieskastel-Bierbach (DE); Zimmer, Karl-Ernst, W-6601 Rigelsberg (DE)
(74) Vertreter: John, Ernst

(56) Entgegenhaltungen:
- DE-A- 2 235 747
- DE-U- 7 328 949
- DE-U- 8 907 121
- US-A- 4 270 671

## Beschreibung

Die Erfindung betrifft eine Einrichtung zum staubarmen bzw. staubfreien Beladen umschlossener Räume, insbesondere zum Beladen von Schiffen mit Schüttgütern, gemäß den gattungsbildenden Merkmalen des ersten Patentanspruches.

Durch das deutsche Gebrauchsmuster DE-U-89 07 121 ist eine Einrichtung zum Beladen, insbesondere von Schiffen bekannt. Es ist eine Zuführeinrichtung vorgesehen, die mit einem im wesentlichen vertikal sich erstreckenden, im Bereich der unteren Austrittsöffnung durch mindestens ein Verschlußelement verschließbaren Rohr oder schlauchförmigen Element zusammenwirkt. Das Verschlußelement ist in Abhängigkeit von dem Gewicht der darauf lastenden Schüttgutsäule im Öffnungssinne betätigbar und bei Reduzierung des Gewichtes selbsttätig verschließbar. Durch diese Maßnahme kann gewährleistet werden, daß das Schüttgut im unteren Bereich mit einer relativ geringen Durchlaufgeschwindigkeit austreten und somit die Staubbildung unterdrückt bzw. beseitigt werden kann. Nachteilig bei dieser Ausführungsform ist jedoch festzustellen, daß in Abhängigkeit von den durchzusetzenden Schüttgütern es materialabhängig infolge von Brückenbildung im Rohr zu Verstopfungen des Auslaufbereiches kommen kann, die bei darauf lastender Schüttgutsäule nur schwierig wieder aufgelöst werden können. Darüber hinaus besteht die Gefahr, daß zum Kleben neigende Schüttgüter bei nicht ständig im Einsatz befindlicher Anlage verhärten und so einen weiteren Betrieb zumindest zeitweise beeinträchtigen, da eine entsprechende Abreinigung des Rohres vonnöten ist.

Durch das deutsche Gebrauchsmuster DE-U-73 28 949 ist eine Vorrichtung mit einem zur Horizontalen angestellten rohrförmigen Fördermittel, beispielsweise einem schrägen Fallrohr, vorbekannt, die zur Abgabe von staubendem Schüttgut, wie beispielsweise Getreide, einsetzbar ist. Am Abgabeende des Fallrohres ist ein in mindestens eine zwischen der Schließstellung und der Öffnungsstellung liegende Drosselstellung einstellbares Verschlußmittel mit unmittelbar am unteren Ende des Fallrohres liegender Abgabestelle angeordnet, welches von einem Füllstandsgeber selbsttätig gesteuert bei einem Absinken der Füllstandshöhe auf ein vorgegebenes unteres Niveau selbsttätig schließt bzw. drosselt und bei Erreichen eines vorgegebenen oberen Niveaus selbsttätig öffnet. Der dem als Doppelklappenverschluß nach Art eines sogenannten Fischmaulverschlusses zugeordnete Füllstandsgeber ist vollständig im Bereich eines dem Fallrohr vorgeschalteten Pufferbunkers angeordnet. Die Füllstandsmessung erfolgt kontinuierlich über die Länge des Pufferbunkers. Die Betätigung des Verschlußelementes erfolgt mittels zweier Hydraulikzylinder, wobei die Ansteuerung der Hydraulikzylinder mittels oberer sowie unterer Füllstandsgeber durchführbar ist. Wie bereits vorab angesprochen, weist auch diese Einrichtung den Nachteil der Brückenbildung infolge Wandreibung bei unterschiedlichsten Materialien auf, so daß bei auftretenden Verstopfungen auch hier Probleme bei der Auflösung derselben gegeben sind. Darüber hinaus besteht die Gefahr, daß infolge auftretender - wenn auch geringfügiger - Staubmengen die Funktion der Hydraulikzylinder beeinträchtigt werden kann.

Die US-A 4,270,671 betrifft eine Einrichtung zur Abgabe von Schüttgut, die die gattungsgemäßen Merkmale des ersten Patentanspruches beinhaltet. Das im wesentlichen horizontal zugeführte und in das segmentförmig aufgeteilte Fallrohr eingebrachte Material betätigt infolge seiner kinetischen Energie das im unteren Fallrohrbereich vorgesehene Verschlußelement im Öffnungssinne. Diese Einrichtung ist zwar auch zum staubarmen Beladen von umschlossenen Räumen geeignet, wobei ein Trimmen, insbesondere von Schiffen, jedoch nicht möglich ist.

Ziel der Erfindung ist, den gattungsbildenden Teil des ersten Patentanspruches dahingehend weiterzubilden, daß eine Einrichtung zum staubarmen bzw. staubfreien Beladen konzipiert wird, die einerseits einfach im Aufbau und wirkungsvoll in ihrer Arbeitsweise ist, und die andererseits auch zum Trimmen, insbesondere von Schiffsladeräumen, eingesetzt werden kann.

Dieses Ziel wird erfindungsgemäß durch die Kombination folgender Merkmale erreicht:
- die einzelnen Segmente des Fallrohres sind mit axialem Abstand zueinander gehalten und/oder geführt,
- zwischen den axial beabstandeten Segmenten des Fallrohres ist ein Rohr vorgesehen, das in seinem oberen Bereich mit dem Auslauf des oberen Segmentes elastisch verbunden und in seinem unteren Bereich zumindest teilweise innerhalb des vom Durchmesser her größeren unteren Segmentes geführt ist,
- der dem Rohr zugewandte Bereich des oberen Segmentes ist mit dem Rohr dergestalt verbunden, daß unter Verwendung einer in diesem Bereich vorgesehenen Nachführeinrichtung eine axiale Relativbewegung des Rohres gegenüber den Segmenten des Fallrohres herbeiführbar ist,
- die Verschlußeinrichtung ist im unteren Bereich des Rohres vorgesehen und mit diesem über Befestigungselemente verbunden.

Vorteilhafte Weiterbildungen des Erfindungsgegenstandes sind den Unteransprüchen zu entnehmen.

Die Vorteile des Erfindungsgegenstandes gegenüber dem St.d.T. sind im wesentlichen darin begründet, daß eine Entkoppelung der im Fallrohr vorhandenen Schüttgutsäule erzielt wird und die auf der Verschlußvorrichtung lastende Schüttgutsäule ausschließlich im Bereich des beweglichen Rohres vorgesehen ist. Da hier infolge der nicht immer konstanten Materialzufuhr eine ständige Relativbewegung der einzelnen Bauteile stattfindet, wird eine Brückenbildung auch bei unterschiedlichsten Schüttgütern nahezu ausgeschlossen und einer möglichen Verstopfung auf diese Weise entgegengewirkt. Die erfindungsgemäße Einrichtung ist einfach im Aufbau und kann jedem beliebigen Anwendungsfall angepaßt werden, wobei im Hinblick auf stärkere Umweltschutzanforderungen bestehende Anlagen problemlos nach- oder umgerüstet werden können.

Ist beispielsweise lediglich eine Beladung in vertikaler bzw. leicht geneigter Richtung vorgesehen, so wird es als absolut ausreichend angesehen, wenn das mit dem oberen Segment elastisch verbundene Rohr mit vorgegebenem radialem Abstand innerhalb der Verbindungselemente gehalten sowie im Bereich des unteren Fallrohrteils geführt wird, da hier keine wesentlichen Querkräfte auftreten. Soll die Einrichtung jedoch auch zum Trimmen, beispielsweise eines Schiffsladeraumes, verwendet werden, so erscheint es sinnvoll, das bewegliche innere Rohr so zu führen, daß bei Schwenkung des Fallrohres um eine Horizontalachse im Bereich seiner beweglichen Elemente möglichst keine radiale Relativbewegung eintritt, um so evtl. Zwängungen entgegenzuwirken. Es muß jedoch in jedem Fall sichergestellt werden, daß das bewegliche Rohr axial gegenüber den anderen Teilen des Fallrohres beweglich bleibt und durch die Nachführeinrichtung auch in axialer Richtung verschoben werden kann. Bei Bedarf kann am beweglichen Rohr mindestens ein Schienenprofil vorgesehen werden, auf welchem entsprechende Laufrollen bewegt werden, die ihrerseits wiederum an dem bzw. den Verbindungselementen verlagert sind.

Damit die Schüttgutströme, die durch den etwa kreisringförmigen Spalt zwischen Fallrohr und Verschlußvorrichtung austreten, wieder der Mitte zugeführt werden können, ist im unteren Bereich des Fallrohres ein sogenannter Konfusor vorgesehen, der, in axialer Richtung gesehen, mit einer kurvenförmigen Kontur ausgebildet ist. Die Kontur richtet sich hierbei einerseits nach der Durchsatzmenge und andererseits nach dem Auftreffwinkel des aus dem Fallrohr austretenden Schüttgutes auf die entsprechende Gegenfläche des Konfusors. Durch die Konzentration des Schüttgutstromes zur Mitte des Konfusors hin wird eine weitere Maßnahme zur Staubeindämmung getroffen.

Eine bevorzugte Ausführungsform des Erfindungsgegenstandes im Hinblick auf die Nachführeinrichtung ist darin zu sehen, daß die Nachführeinrichtung aus mehreren, in entsprechenden Führungselementen gehaltenen Federn, vorzugsweise Schraubenfeder, mit ggf. unterschiedlichen Kennlinien gebildet ist, die einerseits fest mit dem oberen Segment des Fallrohres und andererseits fest mit dem beweglichen Rohr verbunden ist. Innerhalb der Führungseinrichtung ist eine einseitig gelagerte Stange vorgesehen, die mit entsprechenden Führungskörpern ausgestattet ist, und die die Federn aufnimmt. Bei Ansteigen der Schüttgutsäule auf einen vorgegebenen Wert öffnet sich die Verschlußeinrichtung entsprechend der Auslegung der Federn (Federkennlinien) und gibt den Austritt für das Schüttgut frei. Um der Impulskraft bei der Ausschüttung entgegenzuwirken, d.h. zu verhindern, daß durch die erste Schüttgutmenge ein schlagartiges Öffnen der Verschlußvorrichtung stattfindet, ist die Nachführvorrichtung, d.h. die darin enthaltenen Federn, vorgespannt.

Die Verschlußvorrichtung weist vorzugsweise einen pyramidenförmigen Querschnitt auf, wobei auch in geschlossenem Zustand ein von der Höhe her einstellbarer Ringspalt zwischen dem Austritt des unteren Segmentes und der gegenüberliegenden Pyramidenfläche der Verschlußvorrichtung vorgesehen ist. Damit ist der Vorteil verbunden, daß bei Beendigung des Beladevorganges der sich noch in dem Fallrohr befindliche Schüttgutanteil dennoch austreten und somit einer eventuellen Verstopfung des Rohres bei längerem Nichtgebrauch der Einrichtung entgegengewirkt werden kann.

Die Auslegung der Federn bzw. deren Vorspannkraft ist im wesentlichen von den Faktoren Eigengewicht des beweglichen Rohres, Impulskraft (Fallhöhe des Schüttgutes) und der Höhe der Schüttgutsäule oberhalb der Verschlußvorrichtung abhängig.

Alternativ zu der vorab beschriebenen Nachführeinrichtung besteht ebenfalls die Möglichkeit, diese beispielsweise nach Art eines Flaschenzuges auszubilden oder aber Hydraulikzylinder, Gegengewichte oder dgl. Bauteile zu verwenden. Die Auswahl der geeigneten Nachführeinrichtung sollte hierbei vom Bedarfsfall abhängig gemacht werden.

Die Erfindung ist anhand von Ausführungsbeispielen in der Zeichnung dargestellt und wird wie folgt beschrieben. Es zeigen:
- Figur 1: Teilansicht eines Fallrohres für die Schüttgutbeladung in geschlossenem Zustand
- Figur 2: Einzeldarstellung der Verschlußvorrichtung
- Figur 3: Teilansicht des Fallrohres gemäß Figur 1 mit vollständig geöffneter Verschlußvorrichtung
- Figur 4: Einzeldarstellung einer Nachführvorrichtung in Form eines Federpaketes
- Figuren 5 und 6: Prinzipskizzen des Fallrohraustrittes, einerseits mit Verschlußvorrichtung und andererseits mit zusätzlichem Konfusor
- Figur 7: alternative Ausbildung eines Fallrohres mit daran angeformtem Konfusor
- Figur 8: Querschnitt durch die Führung des beweglichen gegenüber dem feststehenden Fallrohrteil gemäß Figur 7

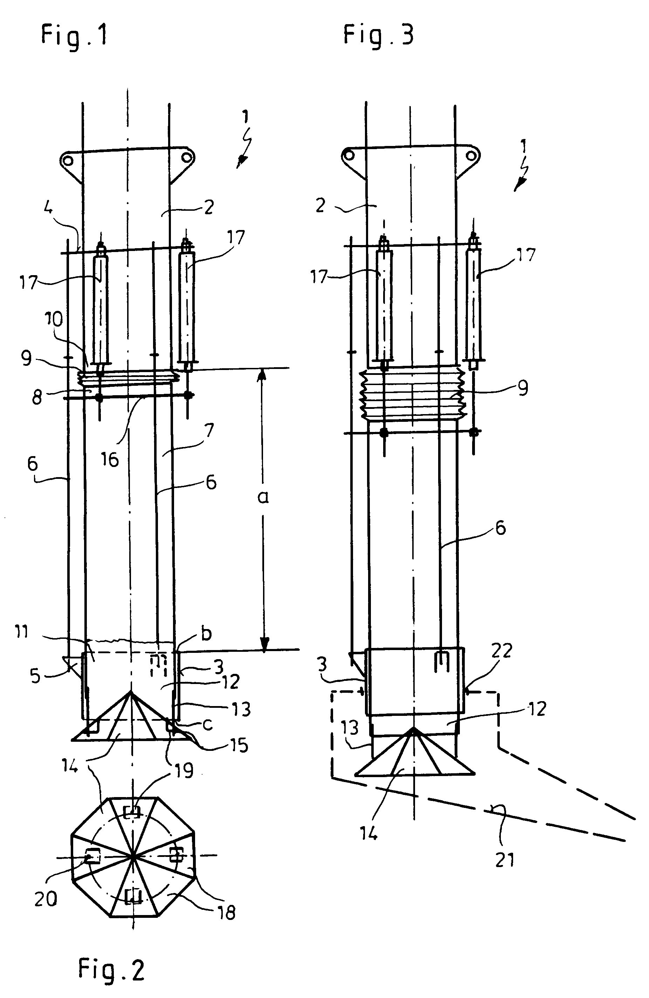

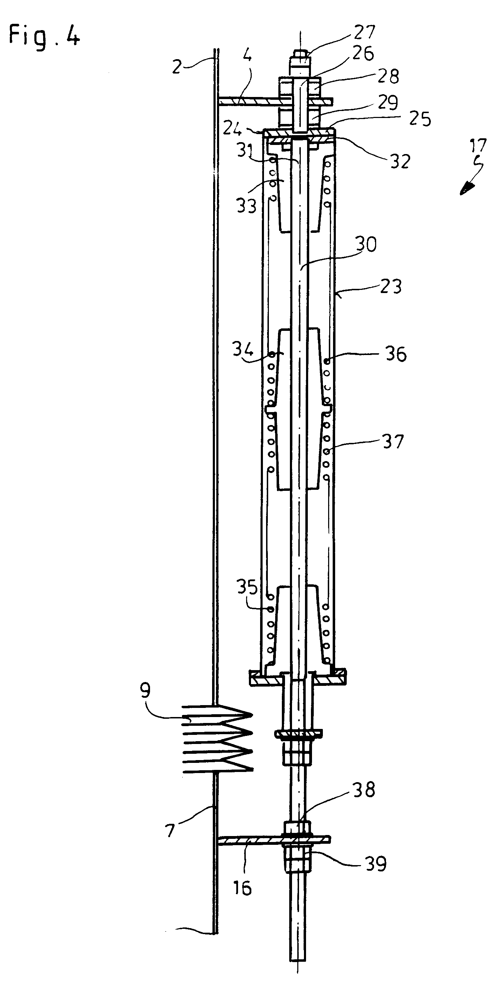

Figur 1 zeigt den unteren Bereich eines an einem nicht weiter dargestellten Ausleger angelenkten Fallrohres 1, das in zwei axial beabstandete Segmente 2,3 unterteilt ist. Das untere Segment 3 weist einen größeren Durchmesser als das obere 2 auf. Die beiden Segmente 2,3 sind jeweils mit Halterungen 4 und 5 versehen, wobei die Halterung 4 ringförmig ausgebildet ist. In diesem Beispiel erstrecken sich zwischen den Halterungen 4 und 5 Zugstangen 6, die gegenüber den Halterungen 4 und 5 verschraubt sind. Der axiale Abstand a zwischen oberem 2 und unterem Segment 3 ist durch Lösen der Verschraubungen einstellbar. Axial zwischen den Segmenten 2 und 3, bzw. in dem Segment 3 geführt, ist ein Rohr 7 vorgesehen, das im Bereich seines oberen Endes 8 über einen Faltenbalg 9 mit dem unteren Ende 10 des Segmentes 2 elastisch verbunden ist. Der untere Teil 11 des Rohres 7 ist, wie bereits angesprochen, im unteren Segment 3 mit vorgegebenem radialem Abstand b geführt. Am freien Ende 12 des Rohres 7 sind Stäbe 13 angeschweißt, die mit der Verschlußvorrichtung 14, beispielsweise über Schraubenverbindungen 15, verbunden sind. Im oberen Bereich 8 des Rohres 7 ist eine weitere ebenfalls ringförmige Halterung 16 vorgesehen, die einerseits zur Führung der Zugstangen 6 und andererseits zur Verlagerung mindestens einer Nachführeinrichtung 17 vorgesehen ist. Die bevorzugte Nachführeinrichtung 17 wird in Figur 4 näher beschrieben. Die Nachführeinrichtung 17 kann z.B. aus Hydraulikzylindern, Federpaketen, einer Seilabspannung, einem Gegengewicht bzw. einem Elektromagneten ausgebildet sein, wobei die Ausbildung bzw. Anwendung vom jeweiligen Bedarfsfall abhängig gemacht werden sollte. In geschlossenem Zustand ist die Verschlußvorrichtung 14 soweit eingefahren, daß ein einstellbarer Ringspalt C zwischen dem unteren Segment 3 und der Oberfläche der Verschlußvorrichtung 14 verbleibt, der u.a. zur Restentleerung vorgesehen ist.

Figur 2 zeigt die Verschlußvorrichtung 14 in der Draufsicht. Erkennbar ist, daß die Verschlußvorrichtung 14 aus mehreren Elementen 18 zusammengesetzt ist, die in zusammengebautem Zustand die Form einer Pyramide ergeben. Ferner erkennbar ist die Verlagerung 19 der Stangenenden 20 im Bereich einzelner Segmente 18.

Figur 3 zeigt das Fallrohr 1 entsprechend Figur 1, jedoch in einer Beladeposition. Erkennbar ist die Verschlußvorrichtung 14 samt Stangen 13, die am freien Ende 12 des Rohres 7 befestigt sind. In diesem Zustand sind die Nachführeinrichtungen 17 ebenfalls in einer ausgefahrenen Position dargestellt; gleiches gilt für den Faltenbalg 9. Ferner angedeutet ist eine sogenannte Trimmschurre 21, die am unteren Segment 3 einen Drehkranz 22 aufweist und gegenüber dem unteren Segment 3 in Umfangsrichtung beweglich ist.

Figur 4 zeigt anhand eines Beispieles eine der vorab angedeuteten Möglichkeiten zur Ausbildung einer Nachführeinrichtung 17. Die Nachführeinrichtung 17 ist in diesem Beispiel aus Führungselementen 23 in Form von Rohren gebildet. Im oberen Bereich 24 des Führungselementes 23 ist eine Abdeckplatte 25 mit daran angeschweißtem Bolzen 26 vorgesehen, der mittels Verschraubung 27 an der Halterung 4 des nur angedeuteten oberen Segmentes 2 verlagert ist. Um bei den ständig auftretenden Bewegungen des Rohres 7 gegenüber den Segmenten 2,3 keine übermäßigen Kräfte in das System einzubringen, sind elastische Bauteile 28,29 als Puffer im Verbindungsbereich zwischen Abdeckplatte 25 und Halterung 4 vorgesehen. Innerhalb des Führungselementes 23 ist eine Stange 30 angeordnet, die im Bereich ihres oberen Endes 31 mit einer Platte 32 versehen ist, deren Durchmesser geringfügig kleiner als der Durchmesser des Führungselementes 23 ist. Im Bereich der axialen Erstreckung der Stange 30 sind Führungskörper 33,34,35 vorgesehen, die entsprechende Ansätze zur Abstützung der Enden jeweils einer Feder 36,37 aufweisen. In Abhängigkeit vom durchzusetzenden Material kann es u.U. sinnvoll sein, Schraubenfedern 36,37 mit unterschiedlichen Federkennlinien zu verwenden. Das freie untere Ende 38 der Stange 30 ist mittels Verschraubung 39 an der Halterung 16 des Rohres 7 verlagert, welches vorzugsweise dem Durchmesser des oberen Segmentes 2 entspricht. Ferner erkennbar ist die elastische Verbindung zwischen dem oberen Segment 2 und dem Rohr 7 in Form eines Faltenbalges 9. Durch Beaufschlagung der hier nicht weiter dargestellten Verschlußvorrichtung 14, die, wie in den Figuren 1 bis 3 beschrieben, am beweglichen Rohr 7 angeformt ist, wird die Stange 30 entgegen der Federkraft aus dem Führungselement 23 herausgezogen, bis ein Zustand entsteht, wie er in Figur 3 dargestellt ist.

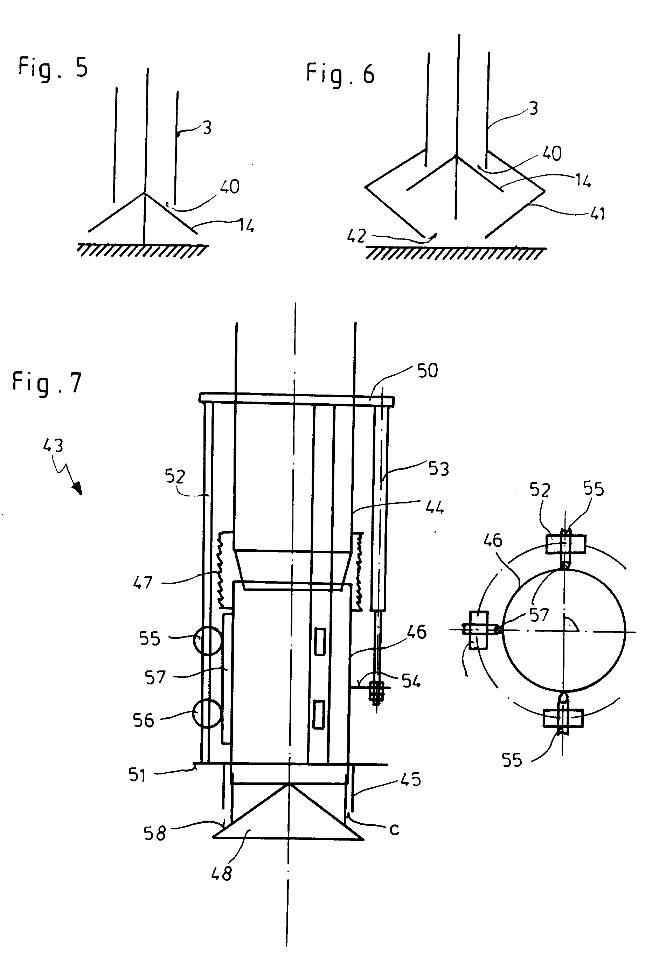

Die Figuren 5 und 6 zeigen als Prinzipskizzen einerseits den Schüttgutaustrittsbereich 40 samt Verschlußvorrichtung 14 und andererseits einen am unteren Segment 3 verlagerten Konfusor 41, der den breitstreuenden Schüttgutstrom dergestalt wieder zusammenführt, daß er durch eine mittige Ablauföffnung 42 austreten kann. Durch diese Maßnahme wird eine Optimierung der Staubreduzierung erreicht.

Figur 7 zeigt eine alternative Ausbildung eines Fallrohres 43, die auch zum Trimmen beispielsweise eines Schiffes eingesetzt werden kann. Analog zu den Figuren 1 bis 3 ist auch hier ein oberes Segment 44, ein unteres Segment 45, ein über einen Balgen 47 elastisch aufgehängtes Rohr 46 sowie eine Verschlußvorrichtung 48 vorgesehen, die, wie bereits in Figur 6 angedeutet, von einem, in axialer Richtung gesehen, kurvenförmig ausgebildeten Konfusor 49 umgeben ist. Ferner erkennbar sind die Halterungen 50 am oberen Segment 44 sowie die Halterungen 51 am unteren Segment 45. Zwischen den beiden Halterungen 50,51 erstrecken sich biegesteife Träger 52, die am Umfang des Fallrohres 43 angeordnet sind. Die Nachführvorrichtung 53 ist analog zur Figur 4 ausgebildet und erstreckt sich zwischen der oberen Halterung 50 und einer weiteren am Rohr 46 angeformten Halterung 54. Damit beim Trimmen, d.h. beim Neigen des Fallrohres 43 gegenüber der Vertikalen, keine Zwängung in das System eingebracht werden kann, sind im Bereich der biegesteifen Träger 52 Führungsrollen 55,56 übereinander angeordnet. Die übereinander angeordneten Führungsrollen 53,54 werden jeweils auf einem schienenförmigen Profil 57 zwangsweise geführt, welches am Rohr 46 vorgesehen ist. Die Verschlußvorrichtung 48 weist die geometrische Form einer Pyramide auf, wobei im eingefahrenen Zustand ein vorgegebener bzw. einstellbarer Spalt c zwischen dem unteren Segment 45 und der Pyramidenoberfläche 58 vorgesehen ist.

Figur 8 zeigt einen Querschnitt durch die Führung. Erkennbar sind das bewegliche Rohr 46, die biegesteifen Träger 52, die Führungsrollen 55 sowie die schienenförmigen Profile 57, die mit 90° Umfangswinkel zueinander angeordnet sind.

## Patentansprüche

1. Einrichtung zum staubarmen bzw. staubfreien Beladen umschlossener Räume, insbesondere zum Beladen von Schiffen mit Schüttgut, indem das Gut etwa horizontal zugeführt und in ein etwa vertikal sich erstreckendes Fallrohr (1,43) eingebracht wird, das im Bereich seiner axialen Erstreckung, insbesondere jedoch in seinem unteren Bereich, zumindest aus zwei Segmenten (2,3 und 44,45) zusammengesetzt ist, wobei das untere Segment (3,45) einen größeren Durchmesser als das obere (2,44) aufweist und im unteren Bereich des Fallrohres (1,43) eine durch das im Fallrohr (1,43) befindliche Material im Öffnungssinne betätigbare Verschlußvorrichtung (14,48) vorgesehen ist, gekennzeichnet durch folgende Merkmale:
- die Segmente (2,3 und 44,45) des Fallrohres (1,43) sind mit axialem Abstand (a) zueinander gehalten und/oder geführt,
- zwischen den axial beabstandeten Segmenten (2,3 und 44,45) des Fallrohres (1,43) ist ein weiteres Rohr (7,46) vorgesehen, das in seinem oberen Bereich (8) mit dem Auslauf (10) des oberen Segmentes elastisch (9) verbunden und in seinem unteren Bereich zumindest teilweise innerhalb des vom Durchmesser her größeren unteren Segmentes (3,45) geführt ist,
- der dem Rohr (7,46) zugewandte Bereich (10) des oberen Segmentes (2,44) ist mit dem Rohr (7,46) dergestalt verbunden, daß unter Verwendung zumindest einer in diesem Bereich vorgesehenen Nachführeinrichtung (17,53) eine axiale Relativbewegung des Rohres (7,46) gegenüber den Segmenten (2,3 und 44,45) des Fallrohres (1,43) herbeiführbar ist,
- die Verschlußvorrichtung (14,48) ist im unteren Bereich (12) des Rohres (7,46) vorgesehen und mit diesem über Befestigungselemente (13,15) verbunden.

2. Einrichtung nach Anspruch 1, dadurch gekennzeichnet, daß das Rohr (7,46) einen Durchmesser aufweist, der etwa dem oberen Segment (2,44) entspricht.

3. Einrichtung nach den Ansprüchen 1 und 2, dadurch gekennzeichnet, daß das obere Segment (2,44) mit dem Rohr (7,46) über einen Faltenbalg (9,47) verbunden ist.

4. Einrichtung nach den Ansprüchen 1 bis 3, dadurch gekennzeichnet, daß der das Verschlußelement (14,48) aufnehmende Teil (12) des Rohres (7,46) in dem als Manschette ausgebildeten unteren Segment (3,45) des Fallrohres (1,43) mit vorgegebenem radialem Abstand (b) gehalten oder innerhalb des unteren Segmentes (3,45) eng geführt ist.

5. Einrichtung nach den Ansprüchen 1 bis 4, dadurch gekennzeichnet, daß im Bereich des oberen (2,44) sowie des unteren Segmentes (3,45) radial nach außen sich erstreckende Halterungen (4,5 und 50,51) vorgesehen sind, zwischen denen mindestens ein Verbindungselement (6,52) angeordnet und dort verlagert ist.

6. Einrichtung nach Anspruch 5, dadurch gekennzeichnet, daß die Verbindungselemente (6) als Zugstangen ausgebildet sind.

7. Einrichtung nach Anspruch 5, dadurch gekennzeichnet, daß die Verbindungselemente (52) als biegesteife Träger ausgebildet sind.

8. Einrichtung nach den Ansprüchen 1 bis 7, dadurch gekennzeichnet, daß der axiale Abstand (a) der beiden Segmente (2,3 und 44,45) einstellbar ist.

9. Einrichtung nach den Ansprüchen 5 bis 7, dadurch gekennzeichnet, daß die Halterung (4,49) zumindest im Bereich des oberen Segmentes (2,44) ringförmig ausgebildet ist.

10. Einrichtung nach den Ansprüchen 5 bis 7, dadurch gekennzeichnet, daß im oberen Bereich (8) des Rohres (7,46) eine weitere Halterung (16) angeordnet ist, die einerseits zur Führung der Verbindungselemente (6) und andererseits zur Verlagerung der Nachführeinrichtung (17,53) vorgesehen ist.

11. Einrichtung nach den Ansprüchen 1 bis 10, dadurch gekennzeichnet, daß die Nachführeinrichtung (17,53) durch mindestens ein an einer vertikal angeordneten Stange vorgesehenes bewegliches Gegengewicht gebildet ist.

12. Einrichtung nach den Ansprüchen 1 bis 10, dadurch gekennzeichnet, daß die Nachführeinrichtung (17,53) nach Art eines Flaschenzuges ausgebildet ist.

13. Einrichtung nach den Ansprüchen 1 bis 10, dadurch gekennzeichnet, daß die Nachführeinrichtung (17,53) durch mindestens einen Hydraulikzylinder gebildet ist.

14. Einrichtung nach den Ansprüchen 1 bis 10, dadurch gekennzeichnet, daß die Nachführeinrichtung (17,53) durch in Führungselementen (23) angeordnete Federn (36,37) gebildet ist.

15. Einrichtung nach Anspruch 14, dadurch gekennzeichnet, daß die Führungselemente (23) einen kreisförmigen Querschnitt aufweisen und im Bereich ihres dem oberen Segment (2) zugewandten Endes (24) eine Abdeckplatte (25) mit daran angeformtem Bolzen (26) aufweisen, der an der Halterung (4) des oberen Segmentes (2) verlagerbar ist.

16. Einrichtung nach den Ansprüchen 10, 14 und 15, dadurch gekennzeichnet, daß in jedem Führungselement (23) eine Stange (30) vorgesehen ist, die im unteren Bereich des Führungselementes (23) geführt und im Bereich der am Rohr (7) vorgesehenen Halterungen (16) verlagert ist.

17. Einrichtung nach Anspruch 16, dadurch gekennzeichnet, daß die Stangen (30) mit Führungskörpern (33,34,35) zur Aufnahme der Federn (36,37) versehen sind.

18. Einrichtung nach den Ansprüchen 14 bis 17, dadurch gekennzeichnet, daß in jedem Führungselement (23) mindestens zwei Federn (36,37) angeordnet sind.

19. Einrichtung nach den Ansprüchen 14 bis 18, dadurch gekennzeichnet, daß die Federn (36,37) unterschiedliche Federkennlinien aufweisen.

20. Einrichtung nach den Ansprüchen 1 bis 19, dadurch gekennzeichnet, daß die Nachführeinrichtung (17,53) vorgespannt ist.

21. Einrichtung nach Anspruch 7, dadurch gekennzeichnet, daß die biegesteifen Träger (52) mit am Rohr (46) ggf. elastisch anlegbaren Rollen (55,56), Walzen oder dgl. versehen sind, die auf entsprechenden am Rohr (46) vorgesehenen Schienenprofilen (57) abrollen.

22. Einrichtung nach Anspruch 21, dadurch gekennzeichnet, daß im Bereich der axialen Erstreckung eines jeden Trägers (52) mehrere Rollen (55,56) axial übereinander angeordnet sind.

23. Einrichtung nach den Ansprüchen 21 und 22, dadurch gekennzeichnet, daß im unteren Bereich des Fallrohres (1) eine Schurre (21) angeordnet ist, die in Umfangsrichtung drehbar und ggf. auch neigbar am Auslauf (12) des unteren Segmentes(3) verlagert ist.

24. Einrichtung nach den Ansprüchen 1 bis 23, dadurch gekennzeichnet, daß das Fallrohr (1,43) im Bereich seiner axialen Erstreckung mit mindestens einem Gelenk versehen ist.

25. Einrichtung nach den Ansprüchen 1 bis 24, dadurch gekennzeichnet, daß im Auslaufbereich (40) des unteren Segmentes (3,45) ein die Verschlußvorrichtung (14,47) übergreifender Konfusor (41,49) angeordnet ist.

26. Einrichtung nach den Ansprüchen 1 bis 25, dadurch gekennzeichnet, daß die Verschlußvorrichtung (14,48) die geometrische Form einer Pyramide aufweist, und daß in eingefahrenem Zustand ein vorgegebener bzw. einstellbarer Umfangsspalt (c) zwischen dem unteren Segment (3,45) und der Pyramidenoberfläche (58) vorgesehen ist.

## Claims

1. Installation for low-dust or dust-free loading of enclosed areas, in particular for loading ships with bulk material, whereby the material is delivered approximately horizontally and is fed into a gravity tube (1, 43), which extends approximately vertically and which, in the area of its axial extension, but in particular in its lower area, is composed of at least two segments (2, 3 and 44, 45), the lower segment (3, 45) having a larger diameter than the upper segment (2, 44), and in the lower area of the gravity tube (1, 43) a locking means (14, 48) is provided, which may be operated in opening direction by the material located in the gravity tube (1, 43), characterised by the following features:
- the segments (2, 3 and 44, 45) of the gravity tube (1, 43) are held and/or disposed at an axial distance (a) from one another;
- a further tube (7, 46), which is flexibly connected (9) in its upper area (8) to the outlet (10) of the upper segment and is arranged in its lower area at least partially inside the lower segment (3, 45) with the larger diameter, is provided between the axially spaced segments (2, 3 and 44, 45) of the gravity tube (1, 43);
- the area (10) of the upper segment (2, 44) facing the tube (7, 46) is connected to the tube (7, 46) in such a way that by using at least one follow-up device (17, 53) provided in this area, the tube (7, 46) may be moved axially relative to the segments (2, 3 and 44, 45) of the gravity tube (1, 43);
- the locking means (14, 48) is provided in the lower area (12) of the tube (7, 46) and is connected thereto by fastening elements (13, 15).

2. Installation according to Claim 1, characterised in that diameter of the tube (7, 46) corresponds approximately to that of the upper segment (2, 44).

3. Installation according to Claims 1 and 2, characterised in that the upper segment (2, 44) is connected to the tube (7, 46) via bellows (9, 47).

4. Installation according to Claims 1 to 3, characterised in that the part (12) of the tube (7, 46) accommodating the locking means (14, 48) is held at a predetermined radial distance (b) in the sleeve-like lower segment (3, 45) of the gravity tube (1, 43) or is tightly disposed inside the lower segment (3, 45).

5. Installation according to claims 1 to 4, characterised in that in the area of the upper (2, 44) and the lower segment (3, 45) mountings (4, 5 and 50, 51) extending radially outwards are provided, between which at least one connecting element (6, 52) is arranged and displaced there.

6. Installation according to Claim 5, characterised in that the connecting elements (6) are provided in the form of pull rods.

7. Installation according to Claim 5, characterised in that the connecting elements (52) are provided in the form of rigid supports.

8. Installation according to Claims 1 to 7, characterised in that the axial distance (a) between the two segments (2, 3 and 44, 45) is adjustable.

9. Installation according to Claims 5 to 7, characterised in that the mounting (4, 49) is ring-shaped at least in the area of the upper segment (2, 44).

10. Installation according to Claims 5 to 7, characterised in that a further mounting (16) is provided in the upper area (8) of the tube (7, 46) to guide the connecting elements (6) as well as to displace the follow-up device (17, 53).

11. Installation according to Claims 1 to 10, characterised in that the follow-up device (17, 53) is formed by at least one movable counterweight provided on a vertically disposed rod.

12. Installation according to Claims 1 to 10, characterised in that the follow-up device (17, 53) is formed as a type of pulley block.

13. Installation according to Claims 1 to 10, characterised in that the follow-up device (17, 53) is formed by at least one hydraulic jack.

14. Installation according to Claims 1 to 10, characterised in that the follow-up device (17, 53) is formed by springs (36, 37) disposed in guide elements (23).

15. Installation according to Claim 14, characterised in that the guide elements (23) have a circular cross-section and are provided in the area of their end (24) facing the upper segment (2) with a cover plate (25) with a bolt (26) formed thereon, which may be displaced on the mounting (4) of the upper segment (2).

16. Installation according to Claims 10, 14 and 15, characterised in that a rod (30) is provided in each guide element (23), which is disposed in the lower area of the guide element (23) and is displaced in the area of the mountings (16) provided on the tube (7).

17. Installation according to Claim 16, characterised in that the rods (30) are provided with guide members (33, 34, 35) to accommodate the springs (36, 37).

18. Installation according to Claims 14 to 17, characterised in that at least two springs (36, 37) are disposed in each guide element (23).

19. Installation according to Claims 14 to 18, characterised in that the springs (36, 37) have different spring characteristics.

20. Installation according to Claims 1 to 19, characterised in that the follow-up device (17, 53) is biased.

21. Installation according to Claim 7, characterised in that the rigid supports (52) are provided with rolls (55, 56), rollers or similar, which may optionally abut the tube (46) flexibly and which run on corresponding rail profiles (57) provided on the tube (46).

22. Installation according to Claim 21, characterised in that several rolls (55, 56) are arranged axially one above the other in the area of the axial extension of each support (52).

23. Installation according to Claims 21 and 22, characterised in that a chute (21), which is mounted for rotation in peripheral direction and may optionally also be inclined at the outlet (12) of the lower segment (3), is disposed in the lower area of the gravity tube (1).

24. Installation according to Claims 1 to 23, characterised in that the gravity tube (1, 43) is provided with at least one articulation in the area of its axial extension.

25. Installation according to Claims 1 to 24, characterised in that a deflector (41, 49) overlapping the locking means (14, 48) is arranged in the outlet area (40) of the lower segment (3, 45).

26. Installation according to Claims 1 to 25, characterised in that the locking means (14, 48) has the geometric shape of a pyramid, and that when moved inward, a predetermined or adjustable peripheral gap (c) is provided between the lower segment (3, 45) and the surface (58) of the pyramid.

## Revendications

1. Installation pour le chargement sans poussières, ou avec peu de poussières, d'enceintes fermées, en particulier pour charger des navires avec des produits en vrac, le produit étant amené de façon sensiblement horizontale et étant introduit dans un tube de chute (1, 43) disposé sensiblement verticalement, qui, dans la zone de son extension axiale, mais en particulier dans sa zone inférieure, est constitué de l'assemblage d'au moins deux segments (2, 3 et 44, 45), le segment inférieur (3, 45) présentant un diamètre plus grand que le segment supérieur (2, 44), et étant entendu que, dans la zone inférieure du tube de chute (1, 43), il est prévu un dispositif de fermeture (14, 48) pouvant être actionné, pour son ouverture, par le matériau se trouvant dans le tube de chute (1, 43),
caractérisé par les caractéristiques suivantes:
- les segments (2, 3 et 44, 45) du tube de chute (1, 43) sont maintenus et/ou guidés les uns par rapport aux autres avec une certaine distance axiale (a),
- entre les segments (2, 3 et 44, 45) décalés axialement du tube de chute (1, 43), il est prévu un autre tube (7, 46) qui, à sa partie supérieure (8), est raccordé élastiquement (9) à la sortie (10) du segment supérieur et qui, à sa partie inférieure, est guidé, au moins partiellement, à l'intérieur du segment inférieur (3, 45), de diamètre plus grand,
- la zone (10) du segment supérieur (2, 44), tournée vers le tube (7, 46), est reliée à ce tube (7, 46) de telle façon qu'en utilisant au moins un dispositif de contrôle du guidage (17, 53) prévu dans cette zone, on puisse provoquer un mouvement axial relatif du tube (7, 46) par rapport aux segments (2, 3 et 44, 45) du tube de chute (1, 43),
- le dispositif de fermeture (14, 48) est prévu dans la zone inférieure (12) du tube (7, 46) et il est relié à celui-ci par des organes de fixation (13, 15).

2. Installation suivant la revendication 1, caractérisée en ce que le tube (7, 46) présente un diamètre qui correspond sensiblement au segment supérieur (2, 44).

3. Installation suivant la revendication 1 et la revendication 2, caractérisée en ce que le segment supérieur (2, 44) est relié au tube (7, 46) par l'intermédiaire d'un soufflet à plis (9, 47).

4. Installation suivant les revendications 1 à 3, caractérisée en ce que la partie (12) du tube (7, 46) recevant l'organe de fermeture (14, 48) est maintenue dans le segment inférieur (3, 45), réalisé sous la forme d'une manchette, du tube de chute (1, 43), à une distance radiale prédéterminée (b), ou qu'elle est guidée étroitement à l'intérieur du segment inférieur (3, 45).

5. Installation suivant les revendications 1 à 4, caractérisée en ce que, dans la zone du segment supérieur (2, 44) et dans celle du segment inférieur (3, 45), des fixations (4, 5 et 50, 51) s'étendant vers l'extérieur sont prévues, entre lesquelles est disposé, et placé à cet endroit, au moins un organe de raccordement (6, 52).

6. Installation suivant la revendication 5, caractérisée en ce que les organes de raccordement (6) sont réalisés sous la forme de tiges de traction.

7. Installation suivant la revendication 5, caractérisée en ce que les organes de raccordement (52) sont réalisés sous la forme de poutres résistant à la flexion.

8. Installation suivant les revendications 1 à 7, caractérisée en ce que la distance axiale (a) des deux segments (2, 3 et 44, 45) est réglable.

9. Installation suivant les revendications 5 à 7, caractérisée en ce que la fixation (4, 49) est réalisée en forme d'anneau, au moins dans la zone du segment supérieur (2, 44).

10. Installation suivant les revendications 5 à 7, caractérisée en ce que, dans la zone supérieure (8) du tube (7, 46), est disposée une autre fixation (16), qui est prévue, d'une part, pour guider les organes de raccordement (6) et, d'autre part, comme support déportant le dispositif de contrôle du guidage (17, 53).

11. Installation suivant les revendications 1 à 10, caractérisée en ce que le dispositif de contrôle du guidage (17, 53) est formé par au moins un contre-poids mobile prévu sur une tige disposée verticalement.

12. Installation suivant les revendications 1 à 10, caractérisée en ce que le dispositif de contrôle du guidage (17, 53) est réalisé sous la forme d'une poulie mouflée.

13. Installation suivant les revendications 1 à 10, caractérisée en ce que le dispositif de contrôle du guidage (17, 53) est réalisé par au moins un vérin hydraulique.

14. Installation suivant les revendications 1 à 10, caractérisée en ce que le dispositif de contrôle du guidage (17, 53) est réalisé par des ressorts (36, 37) disposés dans des organes de guidage (23).

15. Installation suivant la revendication 14, caractérisée en ce que les organes de guidage (23) présentent une section circulaire et, dans la zone de leur extrémité (24) tournée vers le segment supérieur (2), présentent une plaque de recouvrement (25) comportant un tourillon (26) qui lui est adapté et qui peut être monté sur la fixation (4) du segment supérieur (2).

16. Installation suivant les revendications 10, 14 et 15, caractérisée en ce que, dans chaque organe de guidage (23), il est prévu une tige (30) qui est guidée dans la partie inférieure de l'organe de guidage (23) et qui est montée dans la zone des fixations (16) prévues sur le tube (7).

17. Installation suivant la revendication 16, caractérisée en ce que les tiges (30) sont équipées d'organes de guidage (33, 34, 35) pour recevoir les ressorts (36, 37).

18. Installation suivant les revendications 14 à 17, caractérisée en ce que, dans chaque organe de guidage (23), sont disposés au moins deux ressorts (36, 37).

19. Installation suivant les revendications 14 à 18, caractérisée en ce que les ressorts (36, 37) présentent des courbes caractéristiques d'élasticité différentes.

20. Installation suivant les revendications 1 à 19, caractérisée en ce que le dispositif de contrôle du guidage (17, 53) est soumis à une précontrainte.

21. Installation suivant la revendication 7, caractérisée en ce que les poutres (52) résistant à la flexion sont équipées de rouleaux (55, 56), de cylindres, ou similaires, pouvant, le cas échéant, s'appuyer sur le tube (46) et qui roulent sur des profilés (57) formant rails prévus, de manière correspondante, sur le tube (46).

22. Installation suivant la revendication 21, caractérisée en ce que, dans la zone d'extension radiale de chacune des poutres (52), plusieurs rouleaux (55, 56) sont disposés axialement les uns au-dessus des autres.

23. Installation suivant les revendications 21 et 22, caractérisée en ce que,, dans la zone inférieure du tube de chute (1), une trémie (21), qui est montée tournante suivant la direction périphérique et qui peut également, le cas échéant, s'incliner, est disposée à la sortie d'écoulement (12) du segment inférieur (3).

24. Installation suivant les revendications 1 à 23, caractérisée en ce que le tube de chute (1, 43), dans la zone de son extension axiale, est équipé d'au moins une articulation.

25. Installation suivant les revendications 1 à 24, caractérisée en ce que, dans la zone (40) de la sortie d'écoulement (12) du segment inférieur (3, 45), est disposé un convergent (41, 49) recouvrant le dispositif de fermeture (14, 48).

26. Installation suivant les revendications 1 à 25, caractérisée en ce que le dispositif de fermeture (14, 48) présente la forme géométrique d'une pyramide et en ce qu'en position rentrée, il est prévu une fente périphérique (c), prédéterminée ou réglable, entre le segment inférieur (3, 45) et la surface supérieure (58) de la pyramide.
